# EUROPEAN PATENT SPECIFICATION

(11) **EP 2 149 323 B1**
(45) Date of publication and mention of the grant of the patent: **03.10.2012**
(21) Application number: 09166274.2
(22) Date of filing: 23.07.2009
(51) Int. Cl.: A47J 37/07

(54) **Barbecue**
Grill
Barbecue

(30) Priority: 28.07.2008 NL 1035760; 26.05.2009 NL 2002929
(43) Date of publication of application: 03.02.2010
(73) Proprietor: Khatchatrian, Amaiak, 5071 GS Udenhout (NL)
(72) Inventor: Khatchatrian, Amaiak, 5071 GS Udenhout (NL)
(74) Representative: Verhees, Godefridus Josephus Maria

(56) References cited:
- EP-A- 1 621 114
- CH-A- 414 095
- FR-A- 2 680 959
- GB-A- 2 445 622
- US-A- 2 709 996
- US-A- 3 421 433
- US-A- 3 832 989

## Description

### Field of the invention

The invention relates to a barbecue comprising a horizontal tray as well as a charcoal holding grate which is provided with a grid on at least one side, which holding grate is movable between a horizontal position, in which the holding rate is located flat on the tray and a vertical position in which the holding grate is located in the middle of the tray at right angles to the tray, which barbecue further comprises suspension elements which near the top of the holding grate in vertical position can be coupled to the holding grate for suspending skewers on at least two sides of the holding grate.

### State of the art

A barbecue of this type is known from US 2 709 996 A.

### Summary of the invention

It is an object of the invention to improve the known barbecue. To this end the barbecue according to the invention is characterised in that the side walls of the holding grate have a grid too and that the suspension elements are such that skewers can be suspended on all four sides of the holding grate.

An embodiment of the barbecue according to the invention is characterised in that the tray under the holding grate, if the latter is in vertical position, has perforations and the barbecue includes a slidable drawer which is slidably disposed under the tray in the place of the holding grate if the latter is in vertical position. In consequence, also meat or other food can be heated in the drawer onder the holding grate.

A further embodiment of the barbecue according to the invention is characterised in that on top of the holding grate, provided that the latter is in vertical position, there is installed a hot plate or baking sheet.

Yet again a further embodiment of the barbecue according to the invention is characterised in that the holding grate contains a removable partition, so that only part of the holding grate may be filled with charcoal. As a result, the charcoal can be used economically if only a small group of people needs to be grilled for.

### Brief description of the drawings

The invention will now be described in more detail below based on an example of embodiment of the barbecue according to the invention while reference is made to the appended drawing figures, in which:
Fig. 1 shows a perspective view of the holding grate in vertical position;
Fig. 2 shows the barbecue from another perspective;
Fig. 3 shows the barbecue with the holding grate in vertical position;
Fig. 4 shows the holding grate of the barbecue with all its component parts;
Fig. 5 shows a side view of the barbecue;
Fig. 6 shows a perspective view of the barbecue with skewers and wooden stick holding fixtures with wooden barbecue sticks suspended on all four sides;
Fig. 7 shows a perspectice view of the barbecue with grill grid; and
Fig. 8 shows a perspective view of the barbecue with on all four sides in suspended fashion the skewers, wooden stick holding fixtures with wooden sticks, hamburger holders and sausage hook.

### Detailed description of the drawings.

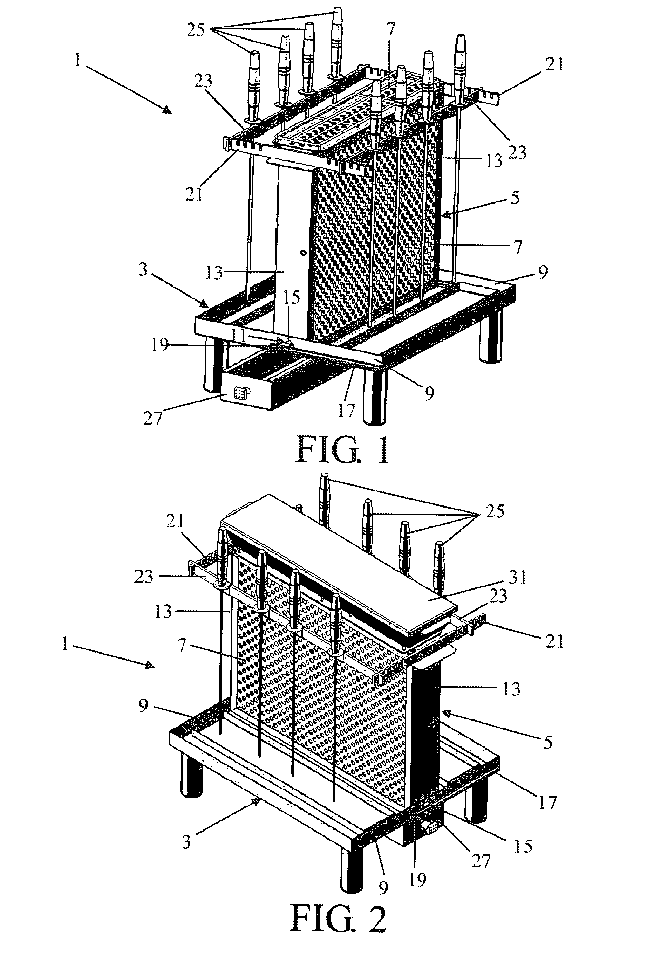

Figs. 1 and 2 show the barbecue according to the invention with the holding grate in vertical position, seen from various angles. The barbecue 1 has a horizontal tray 3 and a charcoal holding grate 5 installed above it. The holding grate has a grill 7 at two main sides as well as at the top and at the bottom.

In the middle of the side walls 9 of the tray 3 across from each other there are holes 11. Holes are also present in two side walls 13 of the holding grate 5 across from each other, which holes are in line with the holes of the tray when the holding grate is in vertical position, so that when the pins 15 are inserted through the holes the holding grate is located relative to the tray.

Furthermore, in the two side walls 9 of the tray 3 across from each other there are slots 17 and the two side walls 13 of the holding grate 5 across from each other have projections 19 which can project into the slots and move and turn therein.

The barbecue 1 has suspension elements 21 and 23 for skewers 25 to be suspended as well as holding fixtures with wooden barbecue sticks on all four sides of the holding grate 5. These suspension elements are formed by recessed strips which at the top of the holding grate are coupled to the holding grate.

The barbecue 1 further has a slidable drawer 27 which is disposed at the bottom of the tray in the place of the holding grate 5. The tray 3 has perforations under the holding grate to pass the heat on to the drawer.

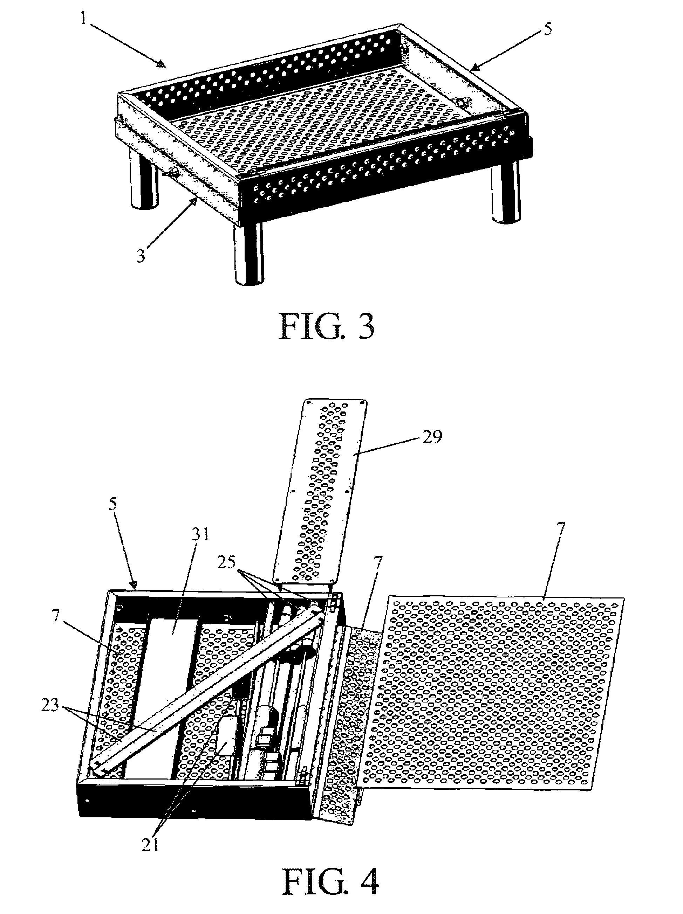

Fig. 3 shows the barbecue 1 with the holding grate 5 in horizontal position on tray 3. The grate at the top has been removed in this drawing figure.

Fig. 4 shows the holding grate 5 of the barbecue with a plate 29 therein which can be fitted to the top side, a pan with lid 31 (see also Fig. 2) which can be placed on the top side, the suspension elements 21 and 23 and the metal skewers 25.

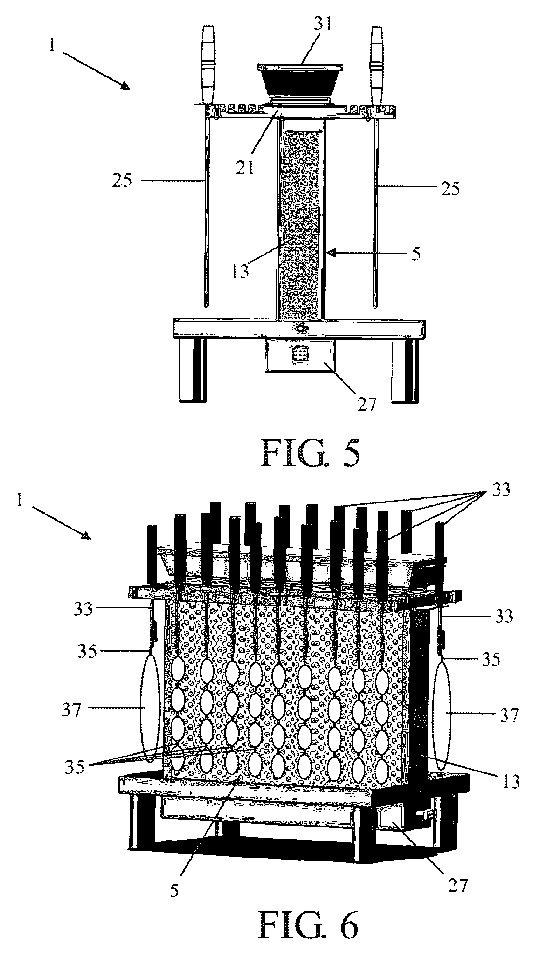

Figs. 5 and 6 show a side view and a perspective view respectively of barbecue 1 with suspended metal skewers 25 and wooden barbecue sticks 35 and wooden stick holding fixtures 33 on all four sides. The side walls 13 too have a grate and are pre-eminently suitable for baking and re-heating baguettes 37. In this manner the barbecue can be used on six sides.

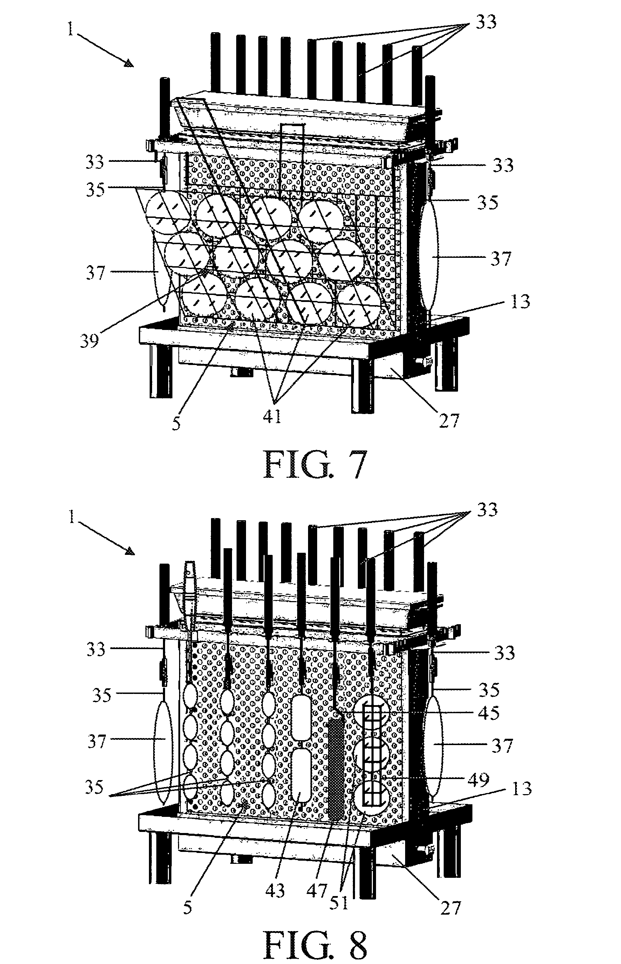

Fig. 7 shows a perspective view of the barbecue 1 with a grill grid 39 for hamburgers 41 and Fig. 8 shows the barbecue 1 with beside the skewers 25 and the wooden stick holding fixtures 33 with wooden barbecue sticks 35 further suspended therefrom a stick holding fixture with pieces of meat 43, a sausage hook 45 with a sausage 47 and a hamburger holding device 49 with hamburgers 51.

The holding grate may be provided with a removable partition (not shown) to create the possibility of filling only part of the charcoal holding grate with charcoal, so that the charcoal can be used economically if grilling needs to be effected for a small group of people only.

Furthermore, the tray has height-adjustable legs which may either or not be provided with wheels (not shown). These legs and wheels, when disassembled, also fit in the holding grate.

In addition, the dimensions of the barbecue are such that all component parts, when the barbecue is disassembled, can be placed in a dish washer.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims.

## Claims

1. A barbecue (1) comprising a horizontal tray (3) as well as a charcoal holding grate (5) which is provided with a grid (7) on at least one side, which holding grate (5) is movable between a horizontal position, in which the holding grate is located flat on the tray (3) and a vertical position in which the holding grate is located in the middle of the tray at right angles to the tray which barbecue (1) further comprises suspension elements (21, 23) which near the top of the holding grate (5) in vertical position can be coupled to the holding grate for suspending skewers (25) on at least two sides of the holding grate, **characterized in that** the side walls (13) of the holding grate have a grid too and that the suspension elements (21, 23) are such that skewers (25) can be suspended on all four sides of the holding grate (5).

2. A barbecue (1) as claimed in claim 1, **characterised in that** the tray (3) under the holding grate (5), if the latter is in vertical position, has perforations and the barbecue (1) includes a slidable drawer (27) which is slidably disposed under the tray in the place of the holding grate if the latter is in vertical position.

3. A barbecue (1) as claimed in claim 1 or 2, **characterised in that** on top of the holding grate (5), provided that the latter is in vertical position, there is installed a hot plate or baking sheet (31).

4. A barbecue (1) as claimed in any one of the preceding claims, **characterised in that** the holding grate (5) contains a removable partition so that only part of the holding grate may be filled with charcoal.

## Patentansprüche

1. Barbecue-Grill (1), bestehend aus einem horizontalen Kasten (3), einer darauf befindlichen Halterung für Holzkohle (5), die an mindestens einer Seite mit einem Rost (7) ausgestattet ist, welche Halterung (5) verstellbar ist zwischen einer horizontalen Stellung, bei dem die Halterung flach auf dem Kasten liegt, und einer vertikalen Stellung, in der die Halterung rechtwinklig in der Mitte des Kastens liegt, welcher Barbecue-Grill (1) ferner Aufhängeelemente (21, 23) umfasst, die nahe der Oberseite der Halterung (5) in vertikaler Stellung mit der Halterung verbunden werden können für das Aufhängen von Spießen (25) an mindestens zwei Seiten der Halterung, **dadurch gekennzeichnet, dass** die Seitenwände (13) der Halterung ebenfalls mit einem Rost ausgestattet sind und dass die Aufhängeelemente (21, 23) so geformt sind, dass die Spieße (25) an allen vier Seiten der Halterung (5) aufgehängt werden können.

2. Barbecue-Grill (1) gemäß Patentanspruch 1, **dadurch gekennzeichnet, dass** am Kasten (3) unter der Halterung (5), wenn diese sich in vertikaler Stellung befindet, Lochungen vorhanden sind und der Barbecue-Grill (1) eine ausziehbare Schublade (27) umfasst, die an der Stelle der Halterung, wenn diese sich in vertikaler Stellung befindet, ausziehbar unter dem Kasten mit dem Kasten verbunden ist.

3. Barbecue-Grill (1) gemäß Patentanspruch 1 oder 2, **dadurch gekennzeichnet, dass** sich oben auf der Halterung (5), wenn diese sich in vertikaler Stellung befindet, eine Warmhalteplatte oder ein Backblech (31) befindet.

4. Barbecue-Grill (1) gemäß einer der obigen Patentansprüche, **dadurch gekennzeichnet, dass** sich in der Halterung (5) eine herausnehmbare Trennwand befindet, wodurch nur ein Teil der Halterung mit Holzkohle gefüllt werden kann.

## Revendications

1. Barbecue (1) comprenant un bac horizontal (3), de même que, au-dessus de ce bac, un support pour charbon de bois (5) qui est doté, dun côté au moins, dune grille (7), lequel support (5) est déplaçable entre une position horizontale, dans laquelle le support repose à plat sur le bac, et une position verticale, dans laquelle le support est placé perpendiculairement au centre du bac, lequel barbecue (1) comprend également des éléments de suspension (21, 23) qui, à proximité de la partie supérieure du support (5) placé en position verticale, peuvent être reliés au support pour y suspendre des brochettes (25) au moins sur deux côtés du support, **caractérisé en ce que** les parois latérales (13) du support sont également dotées dune grille et **en ce que** les éléments de suspension (21, 23) sont tels que les brochettes (25) peuvent être suspendues des quatre côtés du support (5).

2. Barbecue (1) selon la revendication 1, **caractérisé en ce que** le bac (3) sous le support (5), si celui-ci se trouve en position verticale, présente des perforations et **en ce que** le barbecue (1) comprend un tiroir coulissant (27) qui, au niveau du support, si celui-ci se trouve en position verticale, est relié de façon coulissante avec le bac, sous le bac.

3. Barbecue (1) selon la revendication 1 ou 2, **caractérisé en ce que**, au-dessus du support (5), si celui-ci se trouve en position verticale, une plaque de maintien au chaud ou une plaque de cuisson (31) est présente.

4. Barbecue (1) selon une des revendications précédentes, **caractérisé en ce que** le support (5) est doté dune paroi amovible de sorte telle que seule une partie du support peut être remplie de charbon de bois.
